# EUROPEAN PATENT APPLICATION

(11) **EP 4 517 478 A1**
(43) Date of publication of application: **05.03.2025**
(21) Application number: 24197512.7
(22) Date of filing: 30.08.2024
(51) Int. Cl.: G06F 1/16, A63F 13/28, G06F 3/01

(54) **SYSTEM PROVIDING REALISTIC VR CONTENT AND METHOD THEREOF**

(30) Priority: 04.09.2023 KR 20230117258
(71) Applicant: Metaedusys Co., Ltd., Andong-si, Gyeongsangbuk-do 36729 (KR)
(72) Inventor: BAE, Jong hee, Andong-si, Gyeongsangbuk-do (KR)
(74) Representative: Jung, Minkyu

(57) **Abstract**

The present invention provides a system providing realistic VR content and method thereof and more specifically, to an experience terminal that is in direct contact with a body part and is equipped with at least one sensor, and a management server that provides the realistic VR content experience service in virtual reality to an experiencer possessing the above experience terminal, the experience terminal may comprise a main body formed in a hemispherical shape with one side open to have a wearing space that can be worn around the neck of the experiencer, a blower part having a fan that rotates in one direction to generate wind in response to a control of the management server and is provided at both ends of a band part extending lengthwise around a bent part of the main body part, and a fragrance-emitting part that is installed on a part of the remaining band part except for both ends of the band part where the bent part and the blower part of the main body part are formed, and discharges the fragrance material toward the blower part.

## Description

### [Technical field]

The present invention relates to a system providing realistic VR content and method thereof, and more specifically, to an immersive VR content delivery system and method that allows experiencers to simultaneously experience visual, auditory, olfactory, and tactile sensations when experiencing virtual reality, particularly in the context of various disaster scenarios.

### [Background technology of the invention]

In general, Virtual Reality refers to a technology that artificially creates specific environments or situations using a computer, making them appear similar to reality.

Recently, in various fields such as games, sports, education, and medicine, the virtual reality technology is being used to repeatedly train and practice in environments similar to real situations, so that we can effectively deal with real situations.

A fan or blower is a device used to create air flow by force, simulating a natural breeze-like environment.

In order to implement the virtual reality, fans or blowers capable of freely adjusting the direction and speed of the wind are required.

The conventional technology related to smart fans primarily focuses on controlling the airflow and does not disclose any technology for integration with virtual reality.

The matters described as above background technology are intended solely to enhance the understanding of the background of the present invention. They should not be interpreted as an acknowledgment that the conventional technologies described are already known to those skilled in the art.

### [Prior technical documents]

### [Patent documents]

(Patent document 1) Republic of Korea Publication No. 10-2019-0045532

### [Contents of the invention]

### [Problem to be solved]

The problem to be solved by the present invention is to provide a system providing realistic VR content and method thereof.

The objectives of the present invention are not limited to those mentioned above.

Other objectives not explicitly mentioned will become apparent to those skilled in the art from the following description.

### [Means for solving the assignments]

According to an example for implementation work of the present invention for solving the above-described assignment, a system providing realistic VR content comprising; an experiential terminal that is in direct contact with a body part and is equipped with at least one sensor; and
a management server that provides the realistic VR content experience service in virtual reality to an experiencer possessing the experience terminal; and wherein the experiential terminal comprising;
a main body part formed in a hemispherical shape with one side open to have a wearing space that can be worn around the neck of the experiencer;
a blower part having a fan that rotates in one direction to generate wind in response to a control of the management server and is provided at both ends of a band part extending lengthwise around a bent part of the main body part; and
a fragrance-emitting part that is installed on a part of the remaining band part except for both ends of the band part where the bent part and the blower part of the main body part are formed and discharges the fragrance material toward the blower part TheIn an example for implementation work of the present invention, the fragrance-emitting part may comprise; a base part that is provided with a ring shape on a outer surface that is detachable and centered on the band part, and that accommodates the fragrance material so that the fragrance material can be selectively sprayed; and a cover part that has an opening part that selectively exposes a upper surface of the base part;

In an example for implementation work of the present invention, the above base part may comprise;
at least one fragrance receiving part that each receives at least one fragrance material by a partition wall part that divides the internal space of the base part; and the empty receiving part having an empty space and arranged between the fragrance receiving part.

In an example for implementation work of the present invention, when the cover part may comprise; when the fragrance receiving part is opened under the control of the management server, the upper surface of the fragrance receiving part, in which the selected fragrance is received according to a disaster situation, and the opening part is in contact with each other, and the upper surface of the fragrance receiving part is exposed, thereby blocking a scent passage of the fragrance material when the fragrance receiving part is not opened under the control of the management server,
when the fragrance receiving part is not opened under the control of the management server, the remaining part of the cover part excluding the opening part is in contact with the upper surface of the fragrance receiving part, and the upper surface of the empty receiving part and the opening part is in contact with each other, thereby rotating in one direction to expose the upper surface of the empty receiving part, thereby blocking **the scent passage for the fragrance material.**

In an example for implementation work of the present invention, the base part may comprise; when the fragrance receiving part is opened under the control of the management server, the upper surface of the fragrance receiving part, in which the selected fragrance is received according to a disaster situation, and the opening part is in contact with each other, and the upper surface of the fragrance receiving part is exposed, thereby blocking a scent passage of the fragrance material,
when the fragrance receiving part is not opened under the control of the management server, the remaining part of the cover part excluding the opening part is in contact with the upper surface of the fragrance receiving part, and the upper surface of the empty receiving part and the opening part is in contact with each other, thereby rotating in one direction to expose the upper surface of the empty receiving part, thereby blocking **the scent passage for the fragrance material.**

In an example for implementation work of the present invention, comprising a battery part formed on one side of the main body part to supply power; and the sensor part formed on an inner side of the main body part to be in contact with the neck of the experiencer; wherein the sensor part includes
a thermoelectric element that can be cooled and heated.

In an example for implementation work of the present invention, wherein the management server selects a type of the fragrance material according to a disaster situation and control a rotation speed of the blower part to control a amount of fragrance material sprayed and a spray speed of the fragrance material

In addition, the system providing realistic VR content and method thereof according to an example for implementation work of the present invention for solving the above-described assignments includes; a step of executing a realistic VR content experience service for a experiencer who enters a virtual experience space while holding an experience terminal.

The system providing realistic VR content, comprising;
a step for receiving a current location information of the experiencer;
a step for transmitting realistic experience information that can control a type of fragrance, a amount of fragrance sprayed, and a spray speed of fragrance sprayed to the experiencer according to a disaster situation using the experience terminal if the current location information is included in the disaster evacuation location information based on a disaster occurrence location information; and
   a step for terminating the realistic VR content experience service if the experiencer escapes the disaster evacuation location.
   thethe

In an example for implementation work of the present invention, wherein the step of executing the realistic VR content experience service further includes; a step of the system providing realistic VR content, in which, when the experiencer moves from the disaster evacuation location to a disaster occurrence location, the experience terminal is used to control the type of fragrance material, the amount of fragrance material sprayed, and the spraying speed of the fragrance material according to the disaster situation, and real-time realistic experience information is transmitted to the experiencer.
1.

A program according to an example for implementation work of the present invention is combined with a computer as hardware and stored in a computer-readable recording medium so as to perform the realistic VR content providing method.

Other specific details of the present invention are included in the detailed description and drawings.

### [Effect of the invention]

According to the present invention, when anyone of any age or gender experiences various forms of content related to disaster accidents such as natural disasters, safety accidents, and industrial accidents using a wearable device, the experiencer can correctly recognize the risk of disaster accidents and properly respond to various actual disaster accident situations by experiencing visual, auditory, olfactory, and tactile sensations for each disaster accident simultaneously.

The effects of the present invention are not limited to the effects mentioned above, and other effects not mentioned can be clearly understood by those skilled in the art from the description below.

### [Brief description of the drawings]

Figure 1 is a drawing for explaining a realistic VR content providing system according to an example for implementation work of the present invention.
Figure 2 is a perspective view for explaining an experience terminal illustrated in Figure 1.
Figure 3 is a drawing for explaining a fragrance-emitting part illustrated in Figure 2, and Figure 3(a) is a cross-partial view for explaining the fragrance-emitting part.
Figure 4 is a drawing for explaining the operating state of the fragrance-emitting part illustrated in Figure 3.
Figure 5 is a drawing for explaining the method for providing the realistic VR content according to an example for implementation work of the present invention.
Figure 6 is a drawing for explaining a method for controlling an experience terminal using the realistic experience information illustrated in figure 5.

### [Specific details for carrying out the invention]

The advantages and features of the present invention, and the method for achieving them, will become clear with reference to an example for implementation work described in detail below together with the attached figures. The advantages and features of the present invention, and the method for achieving them, will become clear with reference to the example for implementation work described in detail below together with the accompanying figures. However, the present invention is not limited to the examples for implementation disclosed below, but can be implemented in various and different forms, and these examples for implementation are provided only to make the disclosure of the present invention complete and to fully inform a person skilled in the technology of the scope of the present invention, and the present invention is defined only by the scope of the claims.

The terms used in this specification are for the purpose of describing example for implementation work and is not intended to limit the present invention. In this specification, the singular includes the plural unless specifically stated otherwise. The terms of "comprises" and/or "comprising" used in the specification do not exclude the presence or addition of one or more other components in addition to the mentioned components. Throughout the specification, the same reference numerals refer to the same components, and "and/or" includes each or every combination of one or more of the components mentioned. Although "first", "second", etc. are used to describe various components, these components are not limited by these terms. These terms are only used to distinguish one component from another. Accordingly, it should be understood, that the first component mentioned below may also be a second component within the technical spirit of the present invention.

Unless otherwise specified, all terms (including technical and scientific terms) used in this specification may be used in the sense commonly understood by those skilled in the technology to which the present invention belongs. In addition, terms defined in commonly used dictionaries shall not be ideally or excessively interpreted unless explicitly specifically defined.

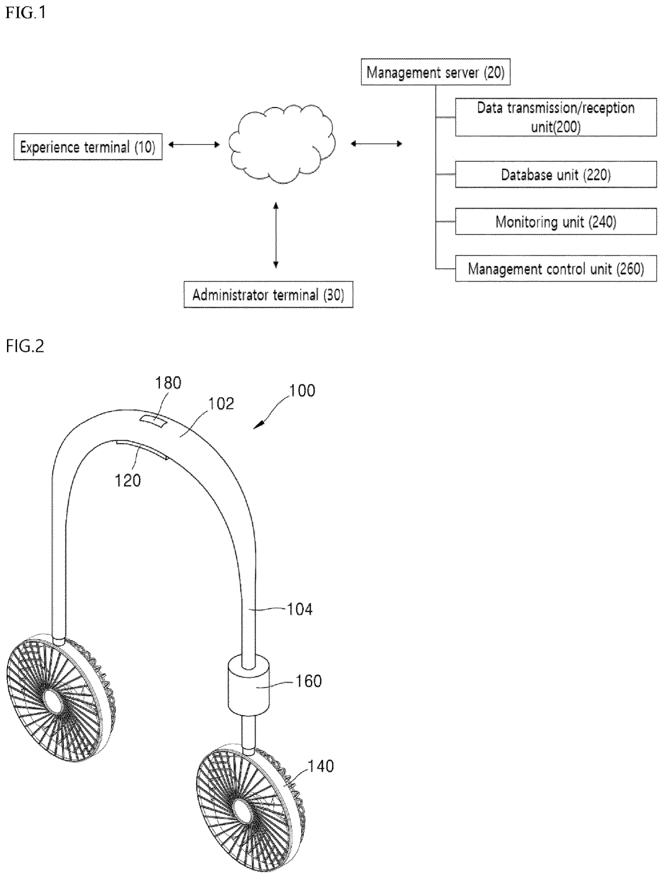

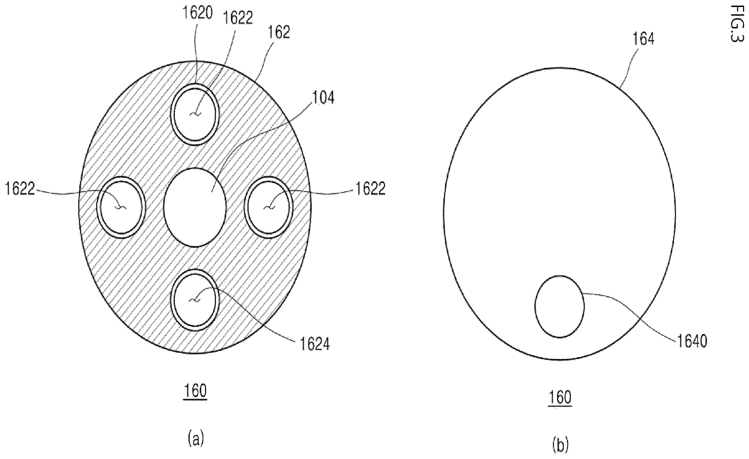

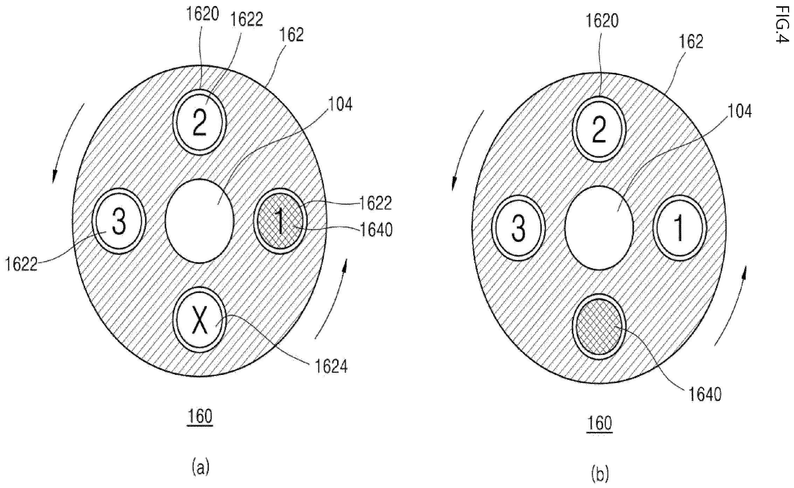

Hereinafter, the examples of the implementation of the present invention will be described in detail with reference to the attached figures. Figure 1 is a drawing for explaining the realistic VR content providing system according to an example for implementation work of the present invention. Figure 2 is a perspective view for explaining the experience terminal illustrated in Figure 1. Figure 3 is a drawing for explaining the fragrance-emitting part illustrated in Figure 2, and Figure 3(a) is a cross-partial view for explaining the fragrance-emitting part. Figure 4 is a drawing for explaining the operating state of the fragrance-emitting part illustrated in Figure 3. Figure 4(a) is a cross-partial view for explaining a state in which a scent passage of the fragrance material, is open, Figure 4(b) is a cross-sectional view explaining a state in which the scent passage of the fragrance material is blocked.

As shown in Figure 1, the realistic VR content providing system (1) according to the example for the implementation work of the present invention may include an experience terminal (10), a management server (20), and a manager terminal (30). At this time, the manager terminal (30) may be omitted.

First, the realistic VR content provision system (1) may be a service that provides situations that may occur in terms of natural disasters such as earthquakes, typhoons, heavy rains, tsunamis, lightning and landslides, safety accidents such as gas accidents, fire accidents, electrical accidents and traffic accidents, and industrial accidents such as falls occurring at industrial sites, by visually, audibly, olfactorily and tactilely implementing the situation while the experiencer enters a virtual experience space while wearing the experience terminal (10), but is not limited thereto.

In addition, the virtual experience space is a space that can be used according to the user's (hereinafter, "experiencer") choice and/or payment/free service, and can be used as a private experience space of one's own, but can also be used by multiple experiencers.

Depending on the example of the implementation work, the realistic VR content experience service can be used through the experiencer's membership registration.

Here, the experience terminal (10), the management server (20), and the administrator terminal (30) can be synchronized in real time using a wireless communication network to transmit and receive data. For example, it can be applied to various communication methods such as wireless LAN (WLAN), DLNA (Digital Living Network Alliance), Wibro (Wireless Broadband: Wibro), WiMAX (World Interoperability for Microwave Access: Wimax), GSM (Global System for Mobile communication), CDMA (Code Division Multi Access), CDMA2000 (Code Division Multi Access 2000), EV-DO (Enhanced Voice-Data Optimized or Enhanced Voice-Data Only), WCDMA (Wideband CDMA), HSDPA (High Speed Downlink Packet Access), HSUPA (High Speed Uplink Packet Access), IEEE 802.16, Long Term Evolution (LTE), LTEA (Long Term Evolution-Advanced), Wireless Mobile Broadband Service (WMBS), BLE (Bluetooth Low Energy), Zigbee, RF(Radio Frequency), LoRa(Long Range), etc, but is not limited to this, and various widely known wireless communication or mobile communication methods can be applied.

The experience terminal (10) can perform the realistic VR content experience service based on realistic experience information through communication with the management server (20).

Specifically, the experience terminal (10) is a wearable device that is directly worn on the body part to experience virtual reality (VR), and can operate using an application program (application program or application) in the present disclosure, and such an application program can be downloaded from the external server or the management server (20) via wireless communication.

Such an experience terminal (10) may include a VR head mounted display (not shown) worn on the head of the experiencer, as shown in Figure 2, a controller (not shown) wirelessly connected to the VR head mounted display, and a neckband that can be worn around the neck of the experiencer.

More specifically, the VR head-mounted display may be composed of a brainwave measurement sensor that directly contacts the forehead of the experiencer when worn to measure brainwaves, a camera part that detects the direction and angle of movement of the experiencer's eye pupils, a motion sensor that detects the direction and angle of movement of the experiencer's head, left and right lens parts that provide image/video screens to the experiencer, a voice output part for outputting voice messages or audio signals, a memory part equipped with software that receives voice/picture/video and a selection/execution control signal for responding to disasters, a wireless communication part for communication with a controller or an external device, and an MCU that executes the realistic VR content experience service stored in the memory part, calculates the experiencer's stress state by time zone using the brainwaves input from the brainwave measurement sensor, moves the screen according to the experiencer's gaze or movement direction input through the camera part or motion sensor, and receives a control signal from the controller through the wireless communication part and displays the corresponding screen.

In this example of the implementation work, the MCU can calculate the emotional state of the experiencer by time zone using the brain waves input from the brain wave measurement sensor.

At this time, the memory part is composed of a memory chip in the form of an SD card, and can be inserted into memory chips of various contents by being removable through an insertion groove provided on one outer side of the VR head mounted display

The memory part can store a plurality of application programs (or applications) running on the VR head-mounted display, data for the operation of the electrocardiogram measuring device (10), and commands. At least some of these applications can be downloaded from an external server via wireless communication.

In addition, the controller is connected wirelessly to the VR head-mounted display, and may include a touchpad and a running button.

Specifically, a touchpad can be used to select a desired location in the virtual experience space by holding it in the hand and pressing it.

The running button is a device that executes a set function when pressed by the experiencer, and can be replaced with a conventional remote control.

When running the realistic VR content experience service using the head-mounted display of this type of structure, the VR head-mounted display, and a wirelessly connected controller, you can experience realistic VR content more realistically visually, auditorily, and tactilely.

In addition, the experience terminal (10) may be worn around the neck of the experiencer and may include a main body part (100), a sensor part (120), a blower part (140), a fragrance-emitting part (160), and a battery part (180).

Specifically, the main body part (100) may include a bending part (102) and a band part (104). At this time, it is preferable that the bending part (102) and the band part (104) are formed as an integral body, but they may be separated and joined.

The bending part (102) can be bent to enable wearing around the neck of the experiencer, and can be formed in a hemispherical shape with one side open to provide a wearing space for wearing around the neck of the experiencer.

The bending part (102) may be covered with an outer skin made of a material such as silicone that can minimize damage to the body of the experiencer.

Depending on the example of the implementation, the bending part (102) may be formed in a shape that can be changed according to the body of the experiencer. For example, it may be formed in a Javara type.

The band part (104) can be formed by extending in the longitudinal direction centered on the bending part (102). At this time, it is preferable that the material of the band part (104) be formed of the same material as that of the bending part (102).

The sensor part (120) may be formed on the inner surface of the bending part (102) of the main body part (100).

Specifically, the sensor part (120) may be formed on the inner surface of the bending part (102) that may come into contact with the neck of the person wearing the experience terminal (10), and may include a thermoelectric element.

For example, the thermoelectric device can transmit the temperature that changes in real time to the experiencer according to the disaster situation during the experience.

In other words, if the virtual experience environment is a fire situation, if the experiencer is exposed to fire and smoke for certain period of times, the thermoelectric device can generate heat so that the experiencer can feel high temperature.

In contrast, if the virtual experience environment is drifting in the sea, if the experiencer is exposed to seawater and cold air for certain period of times, the thermoelectric device can absorb heat so that the experiencer can feel low temperature.

Here, the thermoelectric element is also called a Peltier element, and is a semiconductor element that utilizes the Peltier effect, where heat is generated or absorbed at the junction when current flows through the junction of two different N/P type semiconductors connected in series. It can generate and absorb heat depending on the direction of the current, and the amount of heat generation and absorption is controlled depending on the amount of current. In other words, when current flows in one direction, the back side releases heat and acts as a heating effect, and the front side absorbs heat and acts as a cooling effect. On the other hand, when current flows in the opposite direction, the surface that releases and absorbs heat changes.

In the example of the implementation work, the thermoelectric element can be operated by receiving power from a battery. In addition, although the thermoelectric element is disclosed as one, it is not limited thereto, and a plurality of thermoelectric elements can be formed at a part that comes into contact with the neck of the experiencer.

According to the example of the implementation work, the sensor part (120) can include a temperature sensor (not shown) that is included on the inner side of the contact surface that comes into contact with the skin of the experiencer and detects a temperature change between the skin of the experiencer and the thermoelectric element.

For example, by detecting a temperature rise between a thermoelectric device and the skin, damage to the experiencer's skin due to excessive temperature rise can be prevented in advance, thereby allowing the experiencer to use the experience terminal (10) safely.

When the realistic VR content experience service is executed using a sensor part (120) like this, the realistic VR content can be experienced more realistically and tactilely by the heat generation and heat absorption operations of the thermoelectric device.

The blower part (140) can be equipped with a fan that rotates in one direction in response to the control of the management server (20) and generates wind by being equipped at both ends of the band part (104) that extends lengthwise around the bent bending part (102) of the main body part (100).

The blower part (140) can operate by receiving power from a battery and generate wind through a fan.

In this embodiment, the blower part (140) can deliver a fragrance to the experiencer by a fragrance material of the fragrance-emitting part (160) to be described later.

For example, if the virtual experience environment is a fire situation, the fan of the blower part (140) can be rotated quickly so that the experiencer can smell the fragrance material having a burnt smell emitted from the fragrance-emitting part (160) when the experiencer is exposed to fire and smoke for certain period of times.

In contrast, if the virtual experience environment is drifting in the sea, the fan of the blower part (140) can be rotated quickly so that the experiencer can smell the fragrance material having a sea smell emitted from the fragrance-emitting part (160) when the experiencer is exposed to seawater and cold air for certain period of times.

That is, the experiencer can feel coolness and smell the fragrance at the same time due to the wind generated by the operation of the blower part (140).

When the realistic VR content experience service is executed using the blower part (140), the realistic VR content can be experienced more realistically in terms of touch and smell by driving the fan.

The fragrance-emitting part (160) is mounted on a part of the band part (104) except for the ends on both sides of the band part (104) where the bend part (102) of the main body part (100) and the blower part (140) are formed, and can discharge the fragrance material toward the blower part (140). That is, the fragrance-emitting part (160) can be positioned between the blower part (140) and the bend part (102) and formed adjacent to the blower part (140).

In the example of the implementation work, the fragrance-emitting part (160) can be selectively detached from the band part (104).

Specifically, the fragrance-emitting part (160) may include the base part (162) and the cover part (164), as illustrated in Figure 3.

The base part (162) is provided in a ring shape on the outer surface so as to be detachable centered on the band part (104), and can optionally accommodate a fragrance material so that the fragrance material can be sprayed. That is, the base part (162) is formed to surround the band part (104) along the shape of the band part (104) and can be detached from the band part (104).

More specifically, the base part (162) may include the fragrance receiving part (1622) that receives the fragrance material respectively by the partition wall part (1620) that divides the internal space of the base part (162), and an empty receiving part (1624) that is positioned between the fragrance receiving part (1622) and has an empty space.

The partition wall part (1620) may be formed between the fragrance receiving part (1622) and between the fragrance receiving part (1622) and the empty receiving part (1624) so as to prevent the fragrances of the respective fragrance receiving part (1622) and the empty receiving part (1624) from mixing.

In the example of the implementation work, the partition wall part (1620) is formed in a shape that surrounds the outer surface of the fragrance receiving part (1622) and the empty receiving part (1624), but may be formed in various shapes that can distinguish the fragrance receiving part (1622) and the empty receiving part (1624).

The fragrance receiving part (1622) is a receiving part that can receive the fragrance cartridge filled with a fragrance material, and the lower surface in the direction of the bending part (102) is closed, and the upper surface in the direction of the blower part (140) can be selectively exposed or blocked by the cover part (164).

For example, when the upper surface of the fragrance receiving part (1622) is opened by the rotation of the cover part (164) or the one direction rotation of the base part (162), the fragrance material of the fragrance cartridge received in the fragrance receiving part (1622) can be sprayed or the fragrance cartridge received in the fragrance receiving part (1622) can be replaced.

In contrast, when the upper surface of the fragrance receiving part (1622) is blocked by the rotation of the cover part (164) or the one direction rotation of the base part (162), the spraying of the fragrance material of the fragrance cartridge accommodated in the fragrance receiving part (1622) can be blocked.

The fragrance receiving part (1622) may be formed in a cylindrical shape extending in the longitudinal direction so that fragrance cartridges filled with at least one individual fragrance can be selectively replaced. However, the present invention is not limited thereto, and may be formed in a shape such as a polygon in which fragrance cartridges filled with various fragrance material can be replaced

In the example of the implementation work, the fragrance receiving part (1622) is disclosed as three, but is not limited thereto, and may include at least one or more.

The empty receiving part (1624) is an empty receiving part that does not receive a fragrance cartridge filled with a fragrance material, and the lower surface in the direction of the bending part (102) is closed, and the upper surface in the direction of the blower part (140) can be selectively exposed or blocked by the cover part (164).

For example, when the upper surface of the empty receiving part (1624) is opened by the rotation of the cover part (164) or the one direction rotation of the base part (162), the spraying of the fragrance material of the fragrance cartridge accommodated in the fragrance receiving part (1622) can be blocked.

In contrast, when the upper surface of the empty receiving part (1624) is blocked due to the rotation of the cover part (164) or the one direction rotation of the base part (162), the fragrance material of the fragrance cartridge accommodated in the fragrance receiving part (1622) can be sprayed, or the fragrance cartridge accommodated in the fragrance receiving part (1622) can be replaced.

The empty receiving part (1624) is disclosed in the same shape as the fragrance receiving part (1622), but is not limited thereto. At this time, it is preferable that there is one empty receiving part (1624).

According to the example of the implementation work, the base part (162) may have a display part formed on one side to display the remaining amount of the fragrance cartridge.

The cover part (164) may include an opening part (1640) that selectively exposes the upper surface of the base part (162).

That is, the cover part (164) may be rotatably positioned on the upper surface of the base part (162) and may be formed in a circular shape along the shape of the upper surface of the base part (162).

The opening part (1640) can selectively block or expose the upper surface of the fragrance receiving part (1622) and the empty receiving part (1624) depending on the rotation of the base part (162) or the cover part (162). At this time, the shape of the opening part (1640) can be formed in a circular shape identical to the shape of the upper surface of the fragrance receiving part (1622) and the empty receiving part (1624), but is not limited thereto.

In the case where the fragrance-emitting part (160) of this structure opens the fragrance receiving part (1622) in response to realistic VR content, the upper surface of the fragrance receiving part (1622) containing the selected fragrance material according to the realistic VR content and the opening part (1640) come into contact with each other, so that the upper surface of the fragrance receiving part (1622) is exposed, thereby providing a scent passage for the fragrance material (see Figure 4(a)).

In contrast, when the fragrance-emitting part (160) does not open the fragrance receiving part (1622) in response to realistic VR content, the remaining part of the cover part (164) except for the opening part (1640) covers the entire upper surface of the fragrance receiving part (1622), and the upper surface of the empty receiving part (1624) and the opening part (1640) come into contact so that the upper surface of the empty receiving part (1624) is exposed, thereby blocking the scent passage of the fragrance material (see Figure 4(b)).

In other words, when the realistic VR content experience service is executed using the fragrance-emitting part (160), the realistic VR content can be experienced more realistically through the sense of smell by selectively spraying the fragrance material.

The battery part (180) may be a power supply part supplying power to the thermoelectric element of the sensor part (120), the fan of the blower part (140), and the driving of the fragrance-emitting part (160).

In the example of the implementation, the battery part (180) is disclosed as being formed on the outer surface of the bending part (102) so as to face the sensor part (120), but differently, it can be formed at various locations of the experience terminal (10) except for the location where the main body part (100), the sensor part (120), the blower part (140), the fragrance-emitting part (160), and the battery part (180) are formed.

Meanwhile, according to the example of the implementation work, the experience terminal (10) may include a power supply part (not shown) that can receive external power or internal power and supply power to each component included in the experience terminal (10). This power supply part includes a battery (not shown), and the remaining battery capacity can be visually checked. The battery can be charged by connecting it to a 220V commercial power source or a laptop or computer via USB. In addition, the battery part is a mobile phone battery and uses a 3.7V lithium-ion battery, the most economical and efficient secondary battery, so the battery can be charged with a mobile phone battery charger. Alternatively, the battery can be a built-in battery or a replaceable battery.

An experience terminal (10) of this configuration can provide the realistic VR content to the experiencer so that the experiencer can experience the disaster incident visually, auditorily, olfactorily and tactilely at the same time in response to the realistic VR content.

As previously observed, when the experiencer enters the virtual experience space using the experience terminal (10), the experiencer can simultaneously experience the virtual experience visually, audibly, olfactorily, and tactilely in response to the realistic VR content for each disaster accident. In other words, it is possible to increase convenience and reliability by respecting the diversity of the experiencers who receive the realistic VR content experience service and allowing them to correctly recognize the risk of disaster accidents and respond appropriately to various actual disaster accident situations.

The management server (20) may include a data transmission/reception part (200), a database part (220), a monitoring part (240), and a management control part (260).

The data transmission/reception part (200) may transmit and receive data with the experience terminal (10) or the administrator terminal (30).

The database part (220) can store data transmitted and received with the experience terminal (10) or the administrator terminal (30) via the wireless communication network.

The database part (220) can store data transmitted and received with the experience terminal (10) or the administrator terminal (30) via the wireless communication network. The database part (220) can store data supporting various functions of the management server (20). The database section (220) can store a number of application programs (or applications) running on the management server (20), data for the operation of the management server (20), and commands. At least some of these applications can be downloaded from an external server via wireless communication.

The monitoring part (240) can monitor the operating status of the experience terminal (10) by the experiencer's manipulation, the operating status of the management server (20), and data transmitted and received between the experience terminal (10) or the administrator terminal (30) in real time through the screen. In other word, by checking the usage status of the experience terminal (10) in real time, it is possible to provide more reliability to the experiencer by making the experiencer's use more convenient.

The management control part (260) can provide the realistic VR content experience service when it receives experience request information from the experience terminal (10).

Specifically, the management control part (260) may control the experience terminal (10) in response to the realistic VR content for the experiencer entering the virtual experience space.

The management control part (260) can receive and analyze the real-time current location information of the experiencer while the experiencer is implementing a realistic VR content experience service. That is, the management control part (260) can control the experience terminal (10) based on the current location information of the experiencer.

First, the management control part (260) may generate disaster occurrence location information including the location of the disaster occurrence in response to the realistic VR content, and disaster evacuation location information including a disaster evacuation location where a danger is detected based on the location of the disaster occurrence and where evacuation is required.

In addition, the management control part (260) can generate realistic experience information that may control the experience terminal (10) for disaster occurrence location information and disaster evacuation location information in response to the realistic VR content.

Realistic experience information may include realistic visual information, realistic auditory information, realistic temperature information, and realistic fragrance information. Realistic visual information is information that delivers realistic visuals that allow the experiencer to realistically experience disaster situations, realistic auditory information is information that delivers realistic auditory sensations that allow the experiencer to realistically experience disaster situations, realistic temperature information is information that delivers realistic temperatures that allow the experiencer to realistically experience by analyzing the current location information and disaster evacuation location information centered on the disaster location of the experiencer, and realistic fragrance information can be information that delivers realistic fragrance that allow the experiencer to realistically experience by analyzing the current location information and disaster evacuation location information centered on the disaster location of the experiencer, but is not limited thereto. That is, the realistic visual information and realistic auditory information are information that controls the output of the VR head-mounted display, the realistic temperature information is information that controls the heat generation and heat absorption of the thermoelectric element of the sensor part (120), and the realistic fragrance information may be information that controls the amount of the fragrance material sprayed by the fragrance-emitting part (160), the type of the fragrance material, and the rotation speed of the blower part (140).

Specifically, the management control part (260) analyzes the real-time current location information of the experiencer based on the disaster occurrence location information and the disaster evacuation location information, and when the experiencer is located at the disaster evacuation location, it can control the experience terminal (10) using the realistic experience information to warn the experiencer for each disaster situation.

For example, when a disaster occurs and a person is located at a disaster evacuation location from a fire location, the management control part (260) controls the VR head-mounted display of the experience terminal (10) to visually and audibly inform the person of the disaster situation, and at the same time, controls the operation of the sensor part (120), blower part (140), and fragrance-emitting part (160) of the experience terminal (10) to inform the person of the disaster situation olfactorily and tactilely.

In other words, the management control part (260) can control the experience temperature, the type of the fragrance material, the amount of the fragrance material sprayed, and the spray speed of the fragrance material according to the disaster situation. That is, in response to a fire situation, the thermoelectric element of the sensor part (120) generates heat, and the fragrance material having a burnt smell emitted from the fragrance-emitting part (160) can be provided to the experiencer by rotating the fan of the blower part (140).

In addition, the management control part (260) can provide a first disaster warning to the experiencer visually, audibly, olfactorily, and tactilely, and then, if the experiencer's current location information changes, control the experience terminal (10) to warn the experiencer according to the disaster situation.

Specifically, when the experiencer moves toward the disaster location by analyzing the real-time current location information of the experiencer based on the disaster occurrence location information and the disaster evacuation location information, the management control part (260) can more strongly control the experience temperature, type of fragrance material, amount of fragrance material sprayed, and spray speed of fragrance material according to the disaster situation.

In other words, if the movement location information of the experiencer is included in the disaster occurrence location information based on the disaster occurrence location due to the experiencer's movement, the management control part (260) can control the experience terminal (10) based on the realistic experience information. That is, a second disaster warning can be issued so that the experiencer can escape from the disaster occurrence location.

In contrast, the management control part (260) may end the experience after visually, auditorily, olfactorily, and tactilely giving the first disaster warning to the experiencer, and if the current location information of the experiencer has escaped the disaster evacuation location, the experience may be ended.

According to the example of the implementation work, the management control part (260) may end the realistic VR content experience, and then evaluate the proficiency of the experience based on the results and scores of the realistic VR content experience service, and generate result data corresponding to the result information.

For example, if the management control part (260) determines that a re-experience is necessary based on the experiencer's result data, if the experiencer's proficiency is low, the management control part (260) can create a customized experience scenario using the experiencer's result data. In other words, the experiencer can accurately and safely respond/rescue/escape without panicking in a disaster situation through the re-experience.

According to the example of the implementation, the management control part (260) may generate realistic VR content corresponding to the emergency situation in response to a disaster accident while executing the realistic VR content experience service.

For example, the management control part (260) can generate an unexpected situation regarding a disaster accident that the experiencer cannot predict when experiencing realistic VR content, thereby allowing the experiencer to come into contact with various variables that may occur in a disaster situation, thereby enabling more useful safety education.

According to the example of the implementation work, the management control part (260) may generate a feedback control signal capable of improving a realistic VR content experience service in response to a feedback signal received from an experience terminal (10).

According to the example of the implementation, the management control part (260) can increase the use of the realistic VR content experience service of the experience terminal (10) by generating a control signal including event information.

In addition, the management control part (260) can generate the realistic VR content by repeatedly learning using deep learning techniques or machine learning techniques based on big data.

At this time, the realistic VR content can be updated in real time in response to result data, feedback signals, or feedback control signals.

Such a management server (20) may be implemented by hardware circuits (e.g., CMOS-based logic circuits), firmware, software, or a combination thereof. For example, it may be implemented by utilizing transistors, logic gates, and electronic circuits in the form of various electrical structures.

The administrator terminal (30) is a separate terminal possessed by the administrator, and can transmit and receive data in real time by synchronizing with the experience terminal (10) and the management server (20) using a wireless communication network. At this time, the administrator terminal (30) can transmit and receive data using an application program (or application).

In this way, the administrator terminal (30) may include various portable electronic communication devices that support communication with the experience terminal (10) and the management server (20). For example, the experience terminal (10) may include various portable terminals such as a smart phone, a PDA (Personal Digital Assistant), a tablet, a wearable device, a smartwatch, a smart glass, a head mounted display (HMD), etc., and various IoT (Internet of Things) terminals as separate smart devices, but may also include electronic communication devices such as a desktop computer and a workstation computer that are not portable.

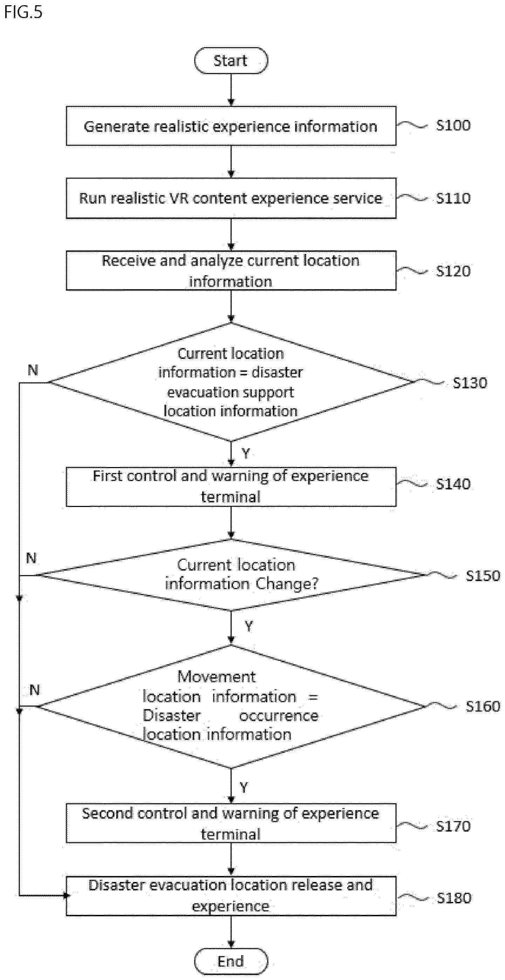

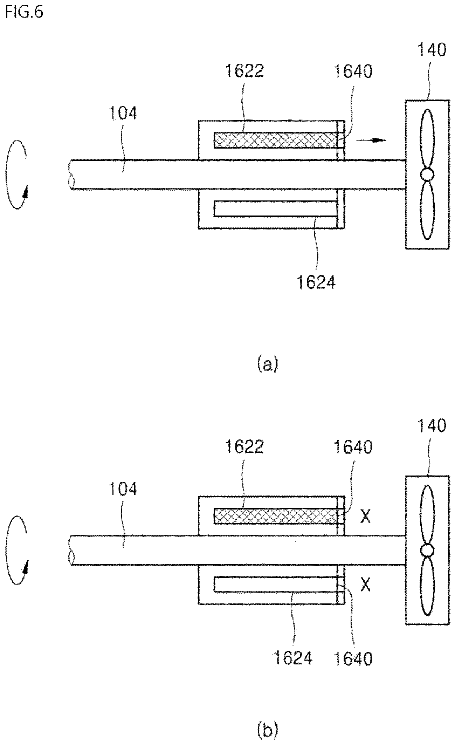

The operation of the system for providing realistic VR content based on virtual reality according to an embodiment of the present invention having such a structure is as follows. Figure 5 is a drawing for explaining a method for providing a virtual reality-based realistic VR content experience service according to an example for implementation work of the present invention, Figure 6 is a drawing for explaining a method for controlling an experience terminal using the realistic experience information illustrated in Figure 5, (a) of figure 6 is a side view for explaining a state in which the scent passage of a fragrance material is open based on the realistic experience information, (b) of figure(b) is a side view for explaining a state in which the scent passage of a fragrance material is blocked based on the realistic experience information.

First, as shown in Figure 5, the management server (20) can generate realistic experience information (S100).

Specifically, the management server (20) can generate realistic experience information that can control the experience terminal (10) in real time based on realistic VR content.

For example, the management server (20) can generate realistic visual information that can be visually conveyed to the experiencer according to the disaster situation, realistic auditory information that can be auditorily conveyed to the experiencer according to the disaster situation, realistic temperature information that can be tactilely conveyed to the experiencer, and realistic olfactory information that can be olfactorily conveyed to the experiencer according to the disaster situation.

Meanwhile, the management server (20) can generate realistic VR content for the realistic VR content experience service based on virtual reality by repeatedly learning using deep learning techniques or machine learning techniques based on big data.

At this time, the management server (20) can generate disaster occurrence location information including the location of the disaster occurrence in response to the realistic VR content, and disaster evacuation location information including a disaster evacuation location where a danger is detected based on the location of the disaster occurrence and where evacuation is required.

Next, the management server (20) can provide the realistic VR content experience service to the experiencer upon the experiencer's request from the experience terminal (10) (S110).

Specifically, the management server (20) can output a VR video corresponding to the realistic VR content to the experiencer who enters a virtual experience space while holding an experience terminal (100).

At this time, the experience terminal (100) can be controlled in real time by the management server (20) by the realistic experience information so that the experiencer can experience visually, auditorily, sensorily and olfactorily.

According to the example of the implementation work, the experience terminal (100) can be automatically controlled by the realistic experience information so that the experiencer can experience visually, auditorily, sensorily and olfactorily.

Next, the management server (20) can receive the current location information of the experiencer in the virtual experience space from the experience terminal (100) in real time (S120).

At this time, the current location information of the experiencer can be automatically received according to a preset cycle, but can be manually transmitted by operating the controller of the experience terminal (100).

Specifically, the management server (20) can analyze the current location information of the experiencer received in real time while the experiencer is executing the realistic VR content experience service.

Next, the management server (20) analyzes the real-time current location information of the experiencer based on the disaster occurrence location information and the disaster evacuation location information, and if the experiencer is located at the disaster evacuation location (S130), the experience terminal (10) can be controlled using the realistic experience information to issue a first warning to the experiencer according to the disaster situation (S140).

For example, when a disaster occurs and a person is located at a disaster evacuation location from a fire location, the management server (20) can control the VR head-mounted display of the experience terminal (10) to visually and audibly inform the person of the disaster situation, and at the same time, control the operation of the sensor part (120), the blower part (140), and the fragrance-emitting part (160) of the experience terminal (10) to inform the person of the disaster situation olfactorily and tactilely.

That is, when the experiencer is exposed to fire and smoke for certain period of times, the management server (20) can increase the temperature of the thermoelectric device , increase the rotation speed of the fan of the blower part (140), and open the fragrance receiving part (1622) having a carbonized fragrance from the fragrance-emitting part (160).

For example, as shown in (a) of figure 6, in response to the realistic experience information, the upper surface of the fragrance receiving part (1622) of the fragrance-emitting part (160) in which the carbonized fragrance material is received is aligned with the opening part (1640), and then the rotation speed of the fan of the blower part (140) is adjusted to control the amount and speed of the fragrance material sprayed, thereby exposing the scent passage of the fragrance delivered to the blower part (14).

Next, the management server (20) can control the experience terminal (10) using the realistic experience information to issue a second warning to the experiencer according to the disaster situation (S170) when the current location information changes due to the experiencer's movement (S150) or when the experiencer's movement location information is included in the disaster occurrence location information (S160).

For example, when a disaster occurs in the form of a fire and the experiencer is located at the location of the disaster from the location of the fire, the management server (20) controls the VR head-mounted display of the experience terminal (10) to visually and audibly inform the experiencer of the disaster situation, and at the same time, controls the operation of the sensor part (120), the blower part (140), and the fragrance-emitting part (160) of the experience terminal (10) to inform the experiencer of the disaster situation olfactorily and tactilely.

In other word , when the experiencer is exposed to fire and smoke for certain period of times, the management server (20) can increase the temperature of the thermoelectric element, increase the rotation speed of the fan of the blower part (140), and open the fragrance receiving part (1622) having a carbonized fragrance from the fragrance-emitting part (160).

For example, as illustrated in (a) of figure6, the upper surface of the fragrance receiving part (1622) of the fragrance-emitting part (160) in which the carbonized fragrance material is received in response to the realistic experience information is aligned with the opening (1640), and then the rotation speed of the fan of the blower part (140) is adjusted to control the amount and speed of the fragrance material to be sprayed, thereby exposing the scent passage of the fragrance material delivered to the blower part (140).

Next, by receiving the current location information of the experiencer, if the experiencer escapes the location of the disaster, the realistic VR content experience service can be terminated (S180).

For example, as shown in (b) of figure 6, in response to the realistic experience information, the upper surface of the empty receiving part (1624) of the fragrance-emitting part (160) in which no separate fragrance material is received is brought into contact with the opening part (1640), and then the rotation of the fan of the blower part (140) is stopped to block the scent passage of the fragrance material delivered to the blower part (140).

Meanwhile, the real-time current location information of the experiencer is analyzed based on the disaster occurrence location information and the disaster evacuation location information, and in case that the experiencer is not located at the disaster evacuation location (S130), the current location information does not change due to the movement of the experiencer (S150), or the experiencer's movement location information is not included in the disaster occurrence location information (S160), the management server (20) can terminate the realistic VR content experience service (S180).

The steps of the method or algorithm described in connection with the example for the implementation of the present invention may be implemented directly in hardware, implemented as a software module executed by hardware, or implemented by a combination of these. The software module may reside in random access memory (RAM), a read only memory (ROM), an erasable programmable ROM (EPROM), an electrically erasable programmable ROM (EEPROM), a flash memory, a hard disk, a removable disk, a CD-ROM, or any other form of computer readable storage medium well known in the art to which the present invention pertains.

As above, although the example for the implementation work of the present invention have been described with reference to the attached figures, but technicians in the technical field to which the present invention pertains will understand that the present invention can be implemented in other specific forms without changing the technical idea or essential features thereof. Therefore, the embodiments described above should be understood as illustrative in all respects and not restrictive.

### [Explanation of symbols]

1 : System providing realistic VR content
10 : Experience terminal
100 : Main body part
102 : Bending part 104 : Band part
120 : sensor part
140 : Blower part
160 : Fragrance emitting part
162 : Base part
1620 : Partition wall part
1622 : Fragrance receiving part
1624 : Empty receiving part
164 : Cover part 1640 : Opening part
180 : Battery part
20 : Management control server
30 : Administrator terminal

## Claims

1. A system providing realistic VR content, comprising;
an experiential terminal that is in direct contact with a body part and is equipped with at least one sensor; and
a management server that provides the realistic VR content experience service in virtual reality to an experiencer possessing the experience terminal; and
wherein the experiential terminal comprising;
a main body part formed in a hemispherical shape with one side open to have a wearing space that can be worn around the neck of the experiencer;
a blower part having a fan that rotates in one direction to generate wind in response to a control of the management server and is provided at both ends of a band part extending lengthwise around a bent part of the main body part; and
a fragrance-emitting part that is installed on a part of the remaining band part except for both ends of the band part where the bent part and the blower part of the main body part are formed and discharges the fragrance material toward the blower part.

2. The system providing realistic VR content of claim 1, wherein the fragrance-emitting part comprises;
a base part that is provided with a ring shape on a outer surface that is detachable and centered on the band part, and that accommodates the fragrance material so that the fragrance material can be selectively sprayed; and
a cover part that has an opening part that selectively exposes a upper surface of the base part.

3. The system providing realistic VR content of claim 2, wherein the base part comprises;
at least one fragrance receiving part that each receives at least one fragrance material by a partition wall part that divides the internal space of the base part; and
an empty receiving part having an empty space and arranged between the fragrance receiving part.

4. The system providing realistic VR content of claim 3, wherein the cover part comprises;
when opening the fragrance receiving part under the control of the management server, rotates in one direction to expose by positioning the opening part so that the upper surface of the fragrance receiving part where the selected fragrance receiving material is received according to a disaster situation, thereby providing a scent passage for the fragrance material
when the fragrance receiving part is not opened under the control of the management server, thereby blocking the scent passage of the fragrance material by positioning the opening part so that the upper surface of the empty receiving part is exposed by rotating in one direction.

5. The system providing realistic VR content of claim 3 or 4, wherein the base part comprises;
when the fragrance receiving part is opened under the control of the management server, the upper surface of the fragrance receiving part, in which the selected fragrance is received according to a disaster situation, and the opening part is in contact with each other, and the upper surface of the fragrance receiving part is exposed, thereby blocking a scent passage of the fragrance material when the fragrance receiving part is not opened under the control of the management server,
when the fragrance receiving part is not opened under the control of the management server, the remaining part of the cover part excluding the opening part is in contact with the upper surface of the fragrance receiving part, and the upper surface of the empty receiving part and the opening part is in contact with each other, thereby rotating in one direction to expose the upper surface of the empty receiving part, thereby blocking the scent passage for the fragrance material.

6. The system providing realistic VR content of any one of claims 1 to 5, comprising;
a battery part formed on one side of the main body part to supply power; and
a sensor part formed on an inner side of the main body part to be in contact with the neck of the experiencer;
wherein the sensor part comprises
a thermoelectric element that can be cooled and heated.

7. The system providing realistic VR content of any one of claims 1 to 6, wherein the management server selects a type of fragrant material according to a disaster situation, and control a rotation speed of the blower part to control a amount of fragrant material sprayed and a spray speed of the fragrant material.

8. In the system providing realistic VR content and method thereof, comprising: a step of executing a realistic VR content experience service to a experiencer who enters a virtual experience space while holding an experience terminal.
The system providing realistic VR content, comprising;
a step for receiving a current location information of the experiencer;
a step for transmitting realistic experience information that can control a type of fragrance, a amount of fragrance sprayed, and a spray speed of fragrance sprayed to the experiencer according to a disaster situation using the experience terminal if the current location information is comprised in a disaster evacuation location information based on a disaster occurrence location information; and
a step for terminating the realistic VR content experience service if the experiencer escapes the disaster evacuation location.

9. The system providing realistic VR content of claim 8, wherein the step of executing the realistic VR content experience service further comprises;
a step of the system providing realistic VR content, in which, when the experiencer moves from the disaster evacuation location to a disaster occurrence location, the experience terminal is used to control the type of fragrance material, the amount of fragrance material sprayed, and the spraying speed of the fragrance material according to the disaster situation, and real-time realistic experience information is transmitted to the experiencer.

10. A computer program stored on a computer-readable recording medium, which is combined with a computer as hardware and enables the method of claim 8 to be performed.
